# FASCICULE DE BREVET EUROPEEN

(11) **EP 1 729 316 B1**
(45) Date de publication et mention de la délivrance du brevet: **23.02.2011**
(21) Numéro de dépôt: 06114734.4
(22) Date de dépôt: 30.05.2006
(51) Int. Cl.: H01H 33/02, H02B 13/045, H02B 1/28

(54) **Dispositif de coupure électrique moyenne tension**
Mittelsspannungsschaltanlage
Medium voltage switching device

(30) Priorité: 31.05.2005 FR 0505476
(43) Date de publication de la demande: 06.12.2006
(73) Titulaire: Pommier, 65200 Bagnères de Bigorre (FR)
(72) Inventeur: Coquaz, Paul, 38110 St-Jean-de-Soudain (FR)
(74) Mandataire: Texier, Christian

(56) Documents cités:
- EP-A- 0 174 251
- EP-A- 0 253 317
- EP-A- 0 847 121
- EP-A- 1 463 174
- WO-A-03/098760
- FR-A- 1 354 914
- FR-A- 2 415 358
- US-A- 4 241 379
- US-A- 5 001 599
- US-A- 5 003 427
- US-A- 5 715 134

## Description

La présente invention concerne le domaine des dispositifs de coupure électrique moyenne tension.

Sans que cette gamme de tension soit limitative, on entend par « moyenne tension », dans le cadre de la présente invention, les tensions comprises entre 1kV et 52kV.

Plus précisément, la présente invention concerne un dispositif de coupure électrique comprenant au moins un sectionneur, c'est-à-dire un moyen de coupure assurant une fonction d'isolement électrique, généralement manoeuvré lui-même hors courant.

Plus précisément encore, la présente invention concerne un dispositif de coupure électrique comprenant au moins un sectionneur à trois positions : ouvert, fermé et mise à la terre.

Comme on le verra par la suite, la présente invention peut trouver diverses applications selon la nature des moyens de commande et/ou de contrôle associés au sectionneur.

Certaines de ces variantes intègrent notamment au moins un disjoncteur, c'est-à-dire un dispositif conçu pour opérer l'ouverture d'une ligne électrique, à des fins de sécurité, lorsque le courant circulant dans cette ligne est détecté comme supérieur à une valeur de consigne.

On a déjà proposé de très nombreux dispositifs de coupure électrique pour ligne moyenne tension.

On trouvera des exemples de dispositifs de coupure électrique connus dans les documents EP 0253317, US 5715134, US 4241379, EP 1463174, EP 0174251, US 5003427 et US 5001599.

Le document EP-A-0253317 décrit un dispositif de coupure électrique, notamment pour moyenne tension comprenant deux compartiments : l'un étanche sous atmosphère contrôlée de gaz neutre, logeant au moins un sectionneur et l'autre qui contient de l'air et qui loge des moyens de contrôle et/ou de protection et qui comporte au moins une trappe d'accès.

Le document EP-A-0847121 décrit une armoire étanche pour réseaux urbains d'alimentation en énergie électrique et/ou électromagnétique, destinée en particulier à abriter des matériels électriques ou optiques assurant la connexion de câbles électriques, de fibres optiques pour courant faible ou fort, et des appareillages électriques et/ou électroniques destinés en particulier à la gestion des feux de signalisation, à la transformation de l'énergie électrique et notamment au redressage du courant électrique. Selon ce document, l'armoire étanche comprend un coffre fermé par une porte articulée sur ledit coffre. La porte comporte sur son bord périphérique interne un joint d'étanchéité. Et sur sa face externe, la porte comporte une poignée centrale coopérant avec un jeu de bielles solidarisées sur la face interne de la porte et permettant d'actionner en pivotement une multiplicité de doigts chacun autour d'un axe perpendiculaire au plan de ladite porte et chacun destiné à exercer une pression lors de leur pivotement sur le bord interne du coffre par l'intermédiaire d'une butée présentant une face inclinée par rapport auxdits bords de manière à rapprocher le bord de la porte et le bord du coffre tout en comprimant le joint d'étanchéité.

On connaît notamment des dispositifs de coupure dans l'air. Ces systèmes ont l'avantage de la simplicité. Cependant, leur pouvoir de coupure est limité.

On connaît également des dispositifs de coupure sous atmosphère neutre, par exemple sous SF6. De tels dispositifs permettent d'améliorer le pouvoir de coupure et/ou de réduire l'encombrement d'ensemble à pouvoir de coupure identique. Il pose cependant fréquemment des problèmes de maintenance non résolus de manière satisfaisante à ce jour.

Un examen complet de l'état de la technique montre que malgré l'importance de ce domaine technique et les enjeux économiques qu'il engendre, le domaine des dispositifs de coupure électrique, en particulier moyenne tension, n'a pas connu d'innovation majeure depuis de nombreuses années.

Ainsi, différents problèmes sont mal résolus de nos jours.

Dans ce contexte, la présente invention a maintenant pour but de proposer un nouveau dispositif de coupure électrique, notamment pour moyenne tension, qui soit à la fois fiable, en particulier étanche, y compris à l'égard d'une immersion complète, économique, d'encombrement limité et bien sûr conforme aux normes actuelles en vigueur.

Les buts précités sont atteints dans le cadre de la présente invention grâce à un dispositif de coupure électrique, du type défini en revendication 1 annexée.

Ainsi, par rapport à certains systèmes antérieurs, complexes, volumineux et coûteux, proposés pour tenter de solutionner les problèmes identifiés, la présente invention apporte une solution simple en scindant l'ensemble des éléments fonctionnels en deux sous-ensembles, l'un placé dans le premier compartiment, étanche et sous atmosphère contrôlée, et l'autre placé dans le second compartiment, dont l'accès reste autorisé, mais avec garantie d'étanchéité à l'état fermé.

En particulier aucun des documents de l'état de la technique antérieurement cités, EP 0253317, US 5715134, US 4241379, EP 1463174, EP 0174251, US 5003427 et US 5001599 n'enseigne ni ne suggère un dispositif conforme à la présente invention. Certains de ces documents ne se préoccupent aucunement d'autoriser un accès et par conséquent de prévoir une trappe à cette fin. D'autres documents évoquent certes une possibilité de trappe pour accéder à des moyens du système de coupure. Cependant il s'agit généralement de trappe autorisant un accès à des chambres sous SF6. Dans ce cas le système exige un rechargement, très contraignant, en SF6 après une séquence d'ouverture et fermeture. En particulier aucun des documents précités n'enseigne ni ne suggère un dispositif de coupure électrique comportant une trappe munie d'un joint d'étanchéité autorisant un accès à une chambre logeant des moyens de contrôle et de protection tout en garantissant une parfaite étanchéité à l'état fermé, compatible avec une continuité de fonctionnement sous immersion.

D'autres caractéristiques, buts et avantages de la présente invention apparaîtront à la lecture de la description détaillée qui va suivre et en regard des dessins annexés, donnés à titre d'exemples non limitatifs et sur lesquels:
- La figure 1 représente une vue schématique en coupe d'un dispositif de coupure conforme à la présente invention,
- La figure 2 représente une vue en perspective des éléments fonctionnels d'une variante de réalisation conforme à la présente invention (le boîtier constituant les deux compartiments étant omis),
- Les figures 3 et 4 représentent schématiquement des vues en coupe de deux autres variantes conformes à la présente invention.

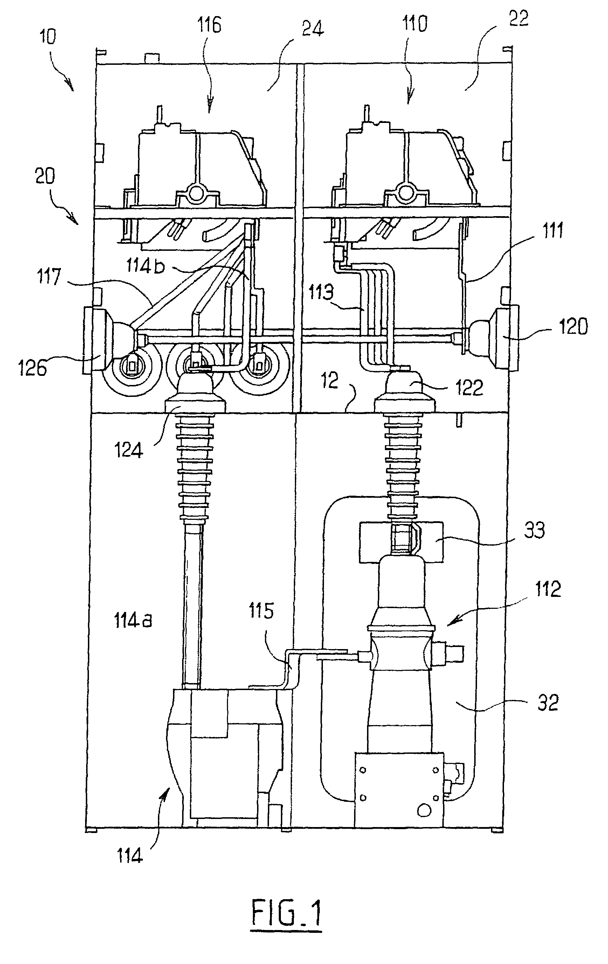

On va dans un premier temps décrire le dispositif illustré sur la figure 1 annexée.

On retrouve sur cette figure annexée un boîtier ou coffre 10 divisé en deux compartiments principaux 20, 30. Comme indiqué précédemment, le premier compartiment 20 est étanche et placé sous atmosphère ou gaz neutre, de préférence du SF6 ou tout gaz équivalent. Ce premier compartiment 20 loge au moins un sectionneur. Comme on le décrira plus en détail par la suite, selon le mode de réalisation représenté sur la figure 1, le premier compartiment 20 loge, pour chaque phase, deux sectionneurs 110, 116 en série.

Le deuxième compartiment 30, qui contient de l'air, loge des moyens de protection et/ou de contrôle, par exemple des disjoncteurs 112 et des transformateurs 114, Le second compartiment 30 comporte au moins une trappe 32 adaptée pour permettre l'accès d'un opérateur aux moyens 112, 114 à des fins de contrôle et/ou maintenance, éventuellement remplacement de matériel déficient. En cas d'urgence, un dispositif mécanique (non représenté), comme par exemple une poignée, permet d'effectuer une manceuvre d'ouverture de secours des moyens de protection et/ou de contrôle depuis l'extérieur du compartiment 30 sans ouvrir la trappe d'accès. La trappe 32 est adaptée pour garantir l'étanchéité du compartiment 30 et, ce faisant, de l'ensemble du boîtier 10 à l'état fermé de la trappe 32. La trappe 32 peut comporter un hublot 33 placé en regard, par exemple d'indicateurs, pour permettre une observation, à partir de l'extérieur du boîtier 10, sans exiger l'ouverture de la trappe 32.

Le boîtier 10 et la trappe 32 peuvent être réalisés en tout matériau approprié, par exemple en acier inoxydable.

Par « trappe », on entend tout moyen d'ouverture, tel qu'une porte, de dimension appropriée pour permettre à un opérateur de pénétrer physiquement à l'intérieur du deuxième compartiment 30 et, si nécessaire, de transférer du matériel, y compris des moyens 112, 114 de remplacement,

La trappe 32 formant ouvrant et/ou l'encadrement de celle-ci formant dormant, sur la paroi complémentaire du compartiment 30 comporte des moyens d'étanchéité adaptés pour garantir l'étanchéité du compartiment 30 à l'égard de tout fluide, gazeux ou liquide, à l'état fermé de la trappe 32. Ces moyens d'étanchéité peuvent faire l'objet de nombreux modes de réalisation. Il peut s'agir, par exemple, de joints, notamment de joints à lèvre ou équivalent.

Selon un mode de réalisation, ces moyens d'étanchéité comprennent un joint gonflable solidaire de l'ouvrant ou du dormant relié à un moyen de gonflage sollicité à la fermeture de la trappe 32. Ce moyen de gonflage peut être formé d'une réserve de gaz sous pression associée à une vanne ouverte automatiquement lors de la fermeture de la trappe 32 pour gonfler le joint précité. Le moyen de gonflage peut également être formé d'un système du type vérin à piston commandé mécaniquement lors de la fermeture de la trappe 32 pour placer le joint gonflable associé sous pression.

Le cas échéant, un témoin, par exemple un témoin lumineux de mise en pression, peut être associé au joint gonflable.

Le cas échéant, il peut être prévu dans le deuxième compartiment 30 des moyens de réception de sachets dessiccateurs.

Selon le mode de réalisation représenté sur la figure 1, les éléments fonctionnels du dispositif de coupure comprennent en série les éléments suivants, pour chaque phase :
- Un premier sectionneur 110 placé dans le premier compartiment 20,
- Un disjoncteur 112 placé dans le deuxième compartiment 30,
- Un transformateur de comptage 114 placé également dans le deuxième compartiment 30 et un deuxième sectionneur 116 placé dans le premier compartiment 20.

Les sectionneurs 110, 116 sont placés en entrée et en sortie du dispositif de coupure.

Le cas échéant, le premier compartiment 20 peut être scindé lui-même en deux sous-compartiments 22, 24 logeant respectivement les deux sectionneurs 110, 112.

Pour chaque phase, le sectionneur 110 est relié aux lignes extérieures par une barre 111 et une traversée 120. Il est relié au disjoncteur 112 par une liaison 113 et une traversée 122 qui traversent la paroi 12 intermédiaire entre les compartiments 20 et 30. Le disjoncteur 112 est relié au transformateur de comptage 114 par une liaison 115. Le transformateur de comptage 114 est relié au sectionneur 116 par une liaison 114 à une traversée 124 et une liaison 114b. La traversée 124 traverse la paroi 12. Enfin, le sectionneur 116 est relié à la ligne extérieure par une liaison 117 et une traversée 126.

Les traversées 120, 122, 124 et 126 peuvent être formées de toute structure connue en soi de l'homme de l'art, adaptée pour permettre à la fois la tenue électrique et l'étanchéité à l'égard des fluides, y compris pour les traversées 122, 124, entre les compartiments 20, 30.

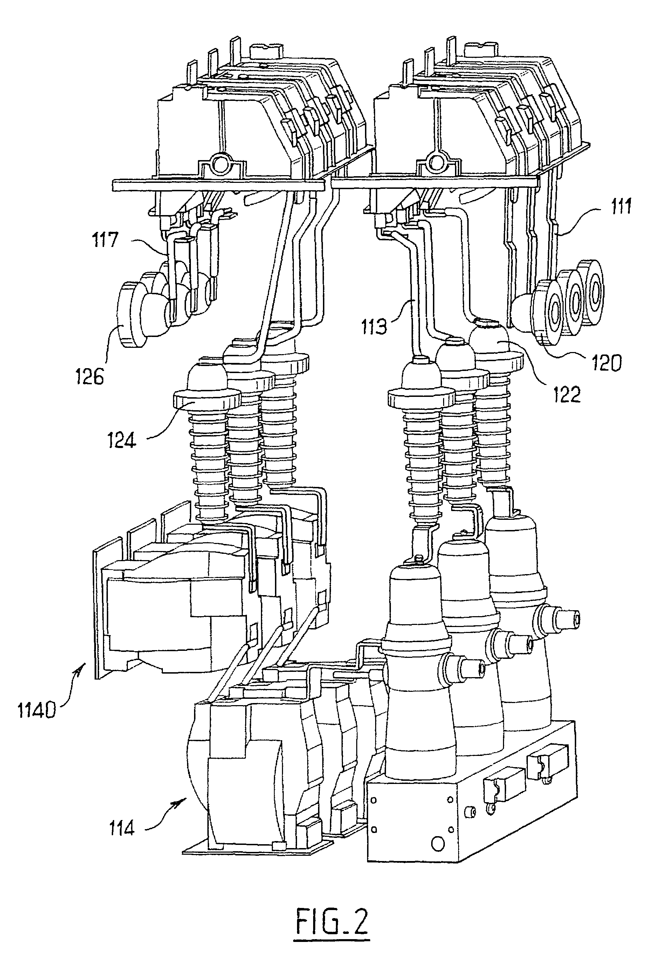

Les dispositions essentielles conformes à l'invention qui ont été mentionnées ci-dessus, à savoir la disposition des éléments fonctionnels de coupure et/ou de contrôle et de protection dans deux compartiments séparés : l'un étanche et sous atmosphère contrôlée, l'autre ouvrable, mais étanche à l'état fermé, sont repris dans l'ensemble des variantes de réalisation conformes à l'invention. Cependant, pour simplifier l'illustration, ces compartiments ne sont pas repris sur la figure 2, et pour simplifier la description, ces moyens ne seront pas redécrits par la suite en regard des figures 2 à 4.

Comme on le voit sur la figure 2, la présente invention s'applique de préférence à un dispositif de coupure triphasé. De ce fait, l'ensemble des moyens précités 110, 112, 114, 116 et les liaisons et traversées associées sont dupliqués en trois exemplaires, l'un pour chaque phase, placé en parallèle,

La variante de réalisation représentée sur la figure 2 se distingue essentiellement de celle illustrée sur la figure 1 par le fait qu'il est prévu, pour chaque phase, deux transformateurs en série, l'un 114 destiné au comptage d'intensité ou consommation, l'autre 1140 destiné à la mesure de défaut.

En eux-mêmes, l'ensemble des éléments fonctionnels intervenant dans la coupure électrique et/ou le contrôle et la protection, à savoir les sectionneurs 110, 116, disjoncteur 112 et transformateurs 114, 1140, peuvent faire l'objet de toute variante connue de l'homme de l'art et ne seront donc pas décrits dans le détail par la suite. Néanmoins, on notera que de préférence, dans le cadre de la présente invention, les disjoncteurs utilisés sont du type à commande électrique et non pas mécanique, par exemple commande par aimant et électro-aimant. Cette disposition permet de garantir l'étanchéité du boîtier 10. Il suffit en effet pour commander les disjoncteurs d'une traversée électrique étanche, puisque l'on s'affranchit de toute nécessité de tringlerie mécanique.

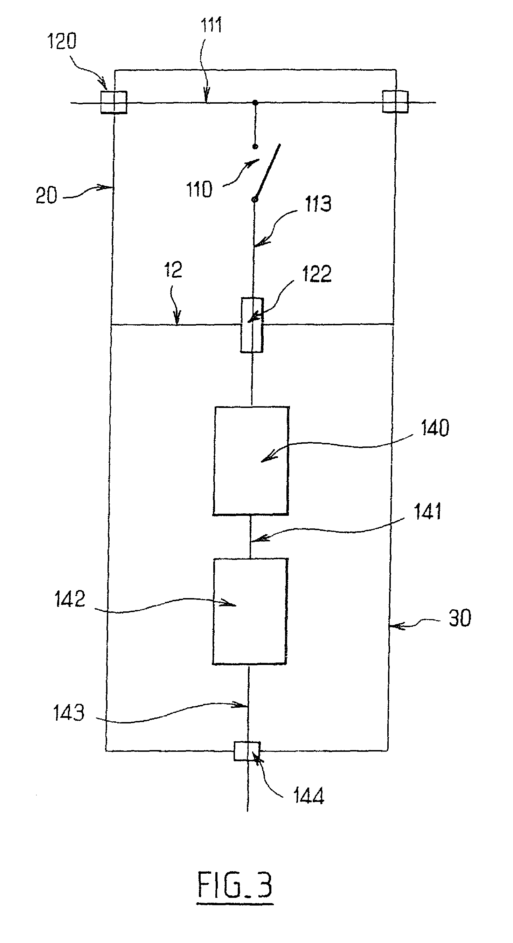

On a représenté sur la figure 3 une variante de réalisation selon laquelle, pour chaque phase, le premier compartiment 20 comprend un disjoncteur 110 associé à une liaison 111 et une traversée 120. Le second compartiment loge en série un fusible 140 et un transformateur de tension moyenne tension / basse tension 142. Le fusible 140 est relié au sectionneur 110 par une liaison 113 et une traversée 122 étanche placée sur la paroi 12. Le fusible 140 est relié au transformateur 142 par une liaison 141. Le transformateur 142 est relié à la ligne extérieure par une liaison 143 et une traversée 144.

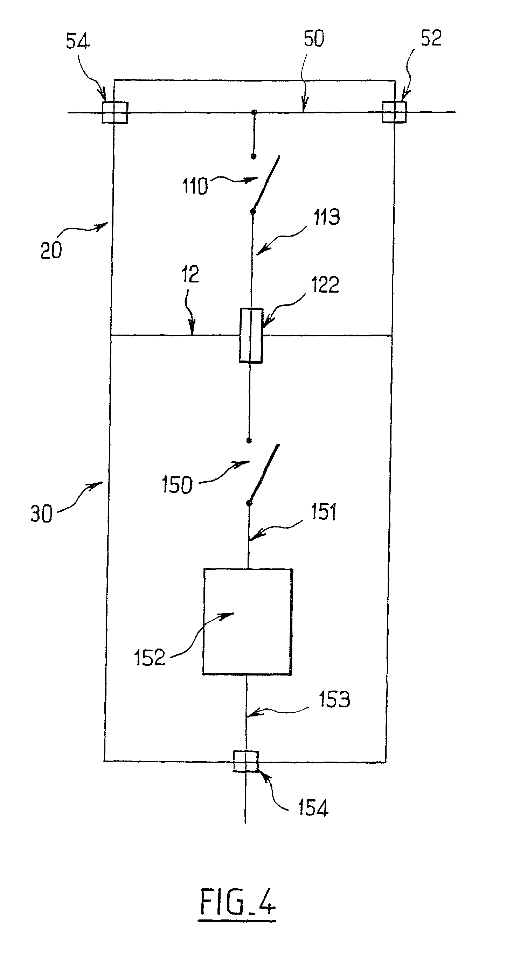

On a représenté sur la figure 4 une variante de réalisation selon laciuelie, pour chaque phase, le premier compartiment 20 est traversé par une barre 50 associée à des traversées 52, 54 et comprend un disjoncteur 110 relié à celle-ci. Le second compartiment loge en série un disjoncteur 150 et au moins un transformateur de courant et/ou de tension 152. Le disjoncteur 150 est relié au sectionneur 110 par une liaison 113 et une traversée 122 étanche placée sur la paroi 12. Le disjoncteur 150 est relié aux transformateurs 152 par une liaison 151. Le ou les transformateur(s) 152 sont reliés à la ligne extérieure par une liaison 153 et une traversée 154.

Les différentes variantes conformes à la présente invention représentées sur les figures 1 à 4 constituent en elles-mêmes des cellules qui peuvent être associées, on peut par exemple relier en série des cellules conformes aux figures 2, 3 et 4 selon la configuration du réseau de distribution électrique recherchée.

La présente invention permet la réalisation d'un ensemble de coupures fiables, de faible encombrement et totalement étanches. Les dispositifs de coupure conformes à l'invention peuvent être placés par exemple sous trottoir sans risque de défaut de fonctionnement, y compris en cas d'inondation ou immersion totale.

A titre d'exemple, le cas échéant, le premier compartiment 20 peut être muni d'une valve permettant une liaison temporaire avec un dispositif de remplissage ou de rafraîchissements de l'atmosphère contrôlée (SF6 par exemple).

Selon l'invention, on prévoit dans la paroi du deuxième compartiment 30 un moyen permettant une mise à l'air libre contrôlée du volume de ce compartiment, avant une intervention. Un tel moyen de mise à l'air libre a pour but principal d'éviter qu'une dépression régnant au sein de ce deuxième compartiment 30, par rapport à l'environnement, ne rende difficile le retrait de la trappe 32. Un tel moyen de mise à l'air libre pourra faire l'objet de tout mode de réalisation approprié connu de l'homme de l'art. On notera cependant que de préférence, dans le cadre de la présente invention, ce moyen de mise à l'air libre est commandé par un élément mécanique conçu d'une part pour interférer avec le retrait de la trappe, en position ouverte du moyen de mise à l'air libre et d'autre part pour être obligatoirement placé en position de fermeture du moyen de mise à l'air libre, lorsque la trappe 32 est présentée en regard de J'ouverture de la paroi du compartiment 30 pour une fermeture de ce dernier. Cet élément mécanique garantit par conséquent la fermeture du moyen de mise à l'air libre lorsque la trappe 32 est en positon sur le deuxième compartiment 30. Un tel moyen mécanique pilotant le moyen de mise à l'air libre peut être adapté pour une manoeuvre manuelle ou pour une manoeuvre automatique, par exemple par une came ou équivalent liée à la trappe 32.

Selon une autre caractéristique avantageuse de la présente invention, le deuxième compartiment 30 peut être équipé de moyens permettant d'éliminer une éventuelle surpression accidentelle au sein du deuxième compartiment 30, due par exemple à une montée en pression par chauffage de l'air remplissant ce compartiment suite à un arc électrique. De tels moyens destinés à éliminer une éventuelle surpression peuvent également faire l'objet de nombreux modes de réalisation, Il peut s'agir par exemple d'une membrane susceptible de rupture.

## Revendications

1. Dispositif de coupure électrique, notamment pour moyenne tension, comprenant deux compartiments (20, 30): l'un (20) étanche, sous atmosphère contrôlée de gaz neutre, logeant au moins un sectionneur (110, 116) et l'autre (30) qui contient de l'air et qui loge des moyens (112, 114) de contrôle et/ou et/ou de protection et qui comporte au moins une trappe d'accès (32) **caractérisé en ce que** la trappe d'accès est associée à un joint d'étanchéité et est adaptée pour garantir l'étanchéité de ce second compartiment (30) à l'état fermé, la paroi du deuxième compartiment (30) comportant un moyen permettant une mise à l'air libre contrôlée du volume de ce compartiment, avant une intervention, le moyen de mise à l'air libre étant commandé par un élément mécanique conçu d'une part pour interférer avec le retrait de la trappe (32), en position ouverte du moyen de mise à l'air libre et d'autre part pour être obligatoirement placé en position de fermeture du moyen de mise à l'air libre, lorsque la trappe (32) est présentée en regard de l'ouverture de la paroi du compartiment (30) pour une fermeture de ce dernier.

2. Dispositif selon la revendication 1 **caractérisé par le fait que** le premier compartiment (20) contient du SF6.

3. Dispositif selon l'une des revendications 1 ou 2 **caractérisé par le fait que** la trappe (32) est associée à un joint gonflable relié à une source de pression activée lors de la fermeture de la trappe (32).

4. Dispositif selon l'une des revendications 1 à 3 **caractérisé par le fait que** le premier compartiment (20) loge deux sectionneurs (110, 116) placés respectivement en entrée et en sortie du dispositif de coupure.

5. Dispositif selon l'une des revendications 1 à 4 **caractérisé par le fait qu'**il comprend au moins un sectionneur (110, 116) à commande électrique.

6. Dispositif selon l'une des revendications 1 à 5 **caractérisé par le fait que** le deuxième compartiment (30) loge, pour chaque phase, des moyens choisis dans le groupe comprenant un disjoncteur (112), un transformateur de comptage (114), un transformateur de mesure de défaut (1140), un transformateur de tension (142), un fusible (140).

7. Dispositif selon l'une des revendications 1 à 6 **caractérisé par le fait qu'**il comprend des moyens de coupure spécifiques respectivement pour chaque phase.

8. Dispositif selon l'une des revendications 1 à 7 **caractérisé par le fait qu'**il comprend des traversées électriques étanches (122, 124) entre les deux compartiments (20, 30).

9. Dispositif selon l'une des revendications 1 à 8 **caractérisé par le fait que** la trappe (32) comporte un hublot (33).

10. Dispositif selon l'une des revendications 1 à 9 **caractérisé par le fait qu'**il comprend, en série, un sectionneur (110) dans le premier compartiment (20), un disjoncteur (112) et un transformateur de comptage (114) dans le deuxième compartiment (30) et un deuxième sectionneur (116) dans le premier compartiment (20).

11. Dispositif selon l'une des revendications 1 à 9 **caractérisé par le fait qu'**il comprend, en série, un sectionneur (110) dans le premier compartiment (20), un disjoncteur (112), un transformateur de comptage (114) et un transformateur de défaut (1140) dans le deuxième compartiment (30) et un deuxième sectionneur (116) dans le premier compartiment (20).

12. Dispositif selon l'une des revendications 1 à 9 **caractérisé par le fait qu'**il comprend, en série, un sectionneur (110) dans le premier compartiment (20), un fusible (140) et un transformateur de tension (142) dans le deuxième compartiment (30).

13. Dispositif selon l'une des revendications 1 à 9 **caractérisé par le fait qu'**il comprend, en série, un sectionneur (110) dans le premier compartiment (20), un disjoncteur (150) et au moins un transformateur (152) dans le deuxième compartiment (30).

14. Dispositif selon l'une des revendications 1 à 13 **caractérisé par le fait que** le deuxième compartiment (30) est équipé de moyens permettant d'éliminer une éventuelle surpression accidentelle au sein du deuxième compartiment (30).

15. Dispositif selon la revendication 14 **caractérisé par le fait que** les moyens destinés à éliminer une éventuelle surpression sont formés d'une membrane susceptible de rupture.

## Claims

1. Electrical switching device, especially for medium voltages, comprising two compartments, (20, 30): one (20) of which is impervious, under a neutral gas controlled atmosphere, housing at least one isolator switch (110, 116), and the other (30) which contains air and which houses means (112, 114) of controlling and/or protecting, and which features at least one access panel (32), **characterised in that** the access panel is associated to a seal and is adapted to guarantee the imperviousness of the second compartment (30), in the closed state, wherein the wall of the second compartment (30) features means permitting a controlled connection to free air of the volume of this compartment, prior to an intervention, wherein the means of connecting to free air are controlled by a mechanical element designed to interfere with the withdrawal of the panel (32), in the open position of the means of connecting to free air and also to be obligatorily placed in the closed position of the means of connecting to free air when the panel (32) is presented opposite the opening of the wall of the compartment (30) to close the latter.

2. Device according to claim 1, **characterised in that** the first compartment (20) contains SF6.

3. Device according to any of claims 1 or 2, **characterised in that** the panel (32) is associated to an inflatable seal connected to a pressure source that is activated when the panel (32) is closed.

4. Device according to any of claims 1 to 3, **characterised in that** the first compartment (20) houses two isolator switches (110, 116) respectively positioned at the input and the output of the isolating device.

5. Device according to any of claims 1 to 4, **characterised in that** it comprises at least one electrically controlled isolator switch (100, 116).

6. Device according to any of claims 1 to 5, **characterised in that** the second compartment (30) houses, for each phase, means selected in the group comprising a circuit breaker (112), a counter transformer (114), a fault measuring transformer (1140), a voltage transformer (142) and a fuse (140).

7. Device according to any of claims 1 to 6, **characterised in that** it comprises specific isolating means respectively for each phase.

8. Device according to any of claims 1 to 7, **characterised in that** it comprises impervious electrical bushings (122, 124) between the two compartments (20, 30).

9. Device according to any of claims 1 to 8, **characterised in that** the panel (32) features a window (33).

10. Device according to any of claims 1 to 9, **characterised in that** it comprises, in series, an isolator switch (110) in the first compartment (20), a circuit breaker (112) and a counter transformer (114) in the second compartment (30) and a second isolator switch (116) in the first compartment (20).

11. Device according to any of claims 1 to 9, **characterised in that** it comprises, in series, an isolator switch (110) in the first compartment (20), a circuit breaker (112), a counter transformer (114) and a fault transformer (1140) in the second compartment (30) and a second isolator switch (116) in the first compartment (20).

12. Device according to any of claims 1 to 9, **characterised in that** it comprises, in series, an isolator switch (110) in the first compartment (20), a fuse (140) and a voltage transformer (142) in the second compartment (30).

13. Device according to any of claims 1 to 9, **characterised in that** it comprises, in series, an isolator switch (110) in the first compartment (20), a circuit breaker (150) and at least one transformer (152) in the second compartment (30).

14. Device according to any of claims 1 to 13, **characterised in that** the second compartment (30) is equipped with means which permit any accidental excess pressure in the second compartment (30) to be eliminated.

15. Device according to any of claims 1 to 14, **characterised in that** the means designed to eliminate any excess pressure are formed by a membrane that is likely to burst.

## Patentansprüche

1. Elektrische Abschaltvorrichtung, insbesondere für eine mittlere Spannung, umfassend zwei Abteile (20, 30): wobei das eine (20) dicht, unter kontrolliertem Druck eines neutralen Gases wenigstens einen Trennschalter (110, 116) aufnimmt, und das andere (30) Luft enthält und Steuer- (112, 114) und/oder Schutzmittel aufnimmt und wenigstens eine Zugangsluke (32) umfasst, **dadurch gekennzeichnet, dass** die Zugangsluke zu einer Dichtung gehört und ausgelegt ist, um die Dichtheit dieses zweiten Abteils (30) im geschlossenen Zustand zu gewährleisten, wobei die Wand des zweiten Abteils (30) ein Mittel umfasst, das ein kontrolliertes Belüften des Volumens dieses Abteils vor einem Eingriff zulässt, wobei das Belüftungsmittel von einem mechanischen Element gesteuert wird, das einerseits entworfen ist, um mit dem Rückzug der Luke (32) bei geöffneter Position des Belüftungsmittels zu interferieren, und andererseits um zwingend in eine Schließposition des Belüftungsmittels gesetzt zu werden, wenn die Luke (32) sich gegenüber der Öffnung der Wand des Abteils (30) für eine Schließung dieses letzten befindet.

2. Vorrichtung gemäß Anspruch 1, **dadurch gekennzeichnet, dass** das erste Abteil (20) SF6 enthält.

3. Vorrichtung gemäß einem der Ansprüche 1 oder 2, **dadurch gekennzeichnet, dass** die Luke (32) zu einer aufblasbaren Dichtung gehört, die mit einer Druckquelle verbunden ist, die bei dem Schließen der Luke (32) aktiviert wird.

4. Vorrichtung gemäß einem der Ansprüche 1 bis 3, **dadurch gekennzeichnet, dass** das erste Abteil (20) zwei Trennschalter (110, 116) unterbringt, die jeweils am Eingang und Ausgang der Abschaltvorrichtung angeordnet sind. ,

5. Vorrichtung gemäß einem der Ansprüche 1 bis 4, **dadurch gekennzeichnet, dass** sie wenigstens einen Trennschalter (110, 116) mit elektrischer Steuerung umfasst.

6. Vorrichtung gemäß einem der Ansprüche 1 bis 5, **dadurch gekennzeichnet, dass** das zweite Abteil (30) für jede Phase Mittel unterbringt, die gewählt sind aus der Gruppe, die einen Ausschalter (112), einen Zähltransformator (114), einen Messfehlertransformator (1140), einen Spannungstransformator (142), eine Sicherung (140) umfasst.

7. Vorrichtung gemäß einem der Ansprüche 1 bis 6, **dadurch gekennzeichnet, dass** sie für jede Phase jeweils spezielle Abschaltmittel umfasst.

8. Vorrichtung gemäß einem der Ansprüche 1 bis 7, **dadurch gekennzeichnet, dass** sie dichte elektrische Durchführungen (122, 124) zwischen den beiden Abteilen (20, 30) umfasst.

9. Vorrichtung gemäß einem der Ansprüche 1 bis 8, **dadurch gekennzeichnet, dass** die Luke (32) ein Fenster (33) umfasst.

10. Vorrichtung gemäß einem der Ansprüche 1 bis 9, **dadurch gekennzeichnet, dass** sie in Reihe einen Trennschalter (110) im ersten Abteil (20), einen Ausschalter (112) und einen Zähltransformator (114) im zweiten Abteil (30) und einen zweiten Trennschalter (116) im ersten Abteil (20) umfasst.

11. Vorrichtung gemäß einem der Ansprüche 1 bis 9, **dadurch gekennzeichnet, dass** sie in Reihe einen Trennschalter (110) im ersten Abteil (20), einen Ausschalter (112), einen Zähltransformator (114) und einen Fehlertransformator (1140) im zweiten Abteil (30) und einen zweiten Trennschalter (116) im ersten Abteil (20) umfasst.

12. Vorrichtung gemäß einem der Ansprüche 1 bis 9, **dadurch gekennzeichnet, dass** sie in Reihe einen Trennschalter (110) im ersten Abteil (20), eine Sicherung (140) und einen Spannungstransformator (142) im zweiten Abteil (30) umfasst.

13. Vorrichtung gemäß einem der Ansprüche 1 bis 9, **dadurch gekennzeichnet, dass** sie einen Trennschalter (110) im ersten Abteil (20), einen Ausschalter (150) und wenigstens einen Transformator (152) im zweiten Abteil (30) umfasst.

14. Vorrichtung gemäß einem der Ansprüche 1 bis 13, **dadurch gekennzeichnet, dass** das zweite Abteil (30) mit Mitteln ausgestattet ist, die erlauben, einen möglichen, zufälligen Überdruck inmitten des zweiten Abteils (30) zu beseitigen.

15. Vorrichtung gemäß Anspruch 14, **dadurch gekennzeichnet, dass** die Mittel, die dazu bestimmt sind, einen möglichen Überdruck zu beseitigen, aus einer bruchempfindlichen Membran gebildet sind.
